# EUROPEAN PATENT APPLICATION

(11) **EP 4 674 731 A1**
(43) Date of publication of application: **07.01.2026**
(21) Application number: 24186206.9
(22) Date of filing: 03.07.2024
(51) Int. Cl.: B62D 15/02, G08G 1/09

(54) **REMOTELY CONTROLLING A MOTOR VEHICLE**

(71) Applicant: Bayerische Motoren Werke Aktiengesellschaft, 80809 München (DE)
(72) Inventor: Chen, Liang, 81927 München (DE); Ceylan, Adem, 80992 München (DE); Mourad, Dr. Alaa, 80995 München (DE)

(57) **Abstract**

A control device (110) for a motor vehicle (105) is proposed, the control device (110) comprising a radio beacon (150) that is disposed at a fixed location outside the motor vehicle (105); and a control unit (140) with a storage (145) for holding a digital car key for said motor vehicle (105). The control unit is adapted to determine a position (165) of the vehicle (105) relative to said radio beacon (150); to determine a destination (155) for said vehicle (105); to authenticate against the motor vehicle (105) using said digital car key; to determine a movement control signal such that the vehicle (105) may move itself from the determined position (165) to the destination (155); and to transmit said movement control signal to said motor vehicle (105).

## Description

Present invention concerns a motor vehicle. More specifically, present invention concerns controlling movement of said motor vehicle from remote.

A motor vehicle is adapted to perform automated valet parking in which its position in a parking site is determined and the vehicle is guided to a free parking space.

CN 113 341 800 A proposes a passenger-riding parking system in which a position of a vehicle is determined using UWB technology.

CN 108 898 880 A suggests a control method for a vehicle wherein isonchronous information is exchanged between a vehicle and a wireless beacon and a position of the vehicle is determined.

CN 110 148 308 A concerns a vehicle positioning system in a parking garage.

However, known technologies do not adequately handle safety aspects of controlling a motor vehicle from the outside. There also appears to be a lack of an integrated solution that is feasible largely with existing components. Hence, an object of present invention is to provide an improved technology for controlling a motor vehicle from outside the vehicle. Present invention solves this object trough subject-matter of enclosed independent claims. Dependent claims give advantageous embodiments of the invention.

According to a first aspect of present invention a control device for a motor vehicle is proposed, the control device comprising a radio beacon that is disposed at a fixed location outside the motor vehicle; and a control unit with a storage for holding a digital car key for said motor vehicle. The control unit is adapted to determine a position of the vehicle relative to said radio beacon; to determine a destination for said vehicle; to authenticate against the motor vehicle using said digital car key; to determine a movement control signal such that the vehicle may move itself from the determined position to the destination; and to transmit said movement control signal to said motor vehicle.

In contrast to known solutions, a digital car key is used to protect the vehicle against unsolicited access. The digital car key is preferred to follow the specifications of the Car Connectivity Consortium (CCC) as laid down and published in the technical specification "Digital Key Release 3" ff. This standard is widely accepted and many modern vehicles feature control units for securing the vehicle with this concept.

It is to be noted that herein, the Digital Car Key as a concept defined by the CCC is written with capitals while a digital car key as a cryptographic data structure which can be stored on a device or used in a predetermined exchange method is written in lower case letters.

The Digital Car Key (DCK) proposes an asymmetric cryptographic method for bi-directional authentication. A digital car key typically comprises a public and a private key which form an insolvable pair. Authentication may be done using a challenge-response scheme based on the key pair. In DCK, a two-sided authentication between a vehicle and a device holding a digital car key is preferred.

Advantageously, a method for determining the relative position of the vehicle with respect to the beacon can be used from the DCK specification. Hardware that is adapted to comply with said specification may be used for the technique disclosed herein with little or no modifications.

It is furthermore preferred that the radio beacon uses a first radio technology and the control device comprises a wireless interface that uses a second radio technology different from the first radio technology. This way, the first radio technology may be chosen with good spatial resolution of the determined position in mind while the second radio technology may be adapted to carry over a larger distance, provide a higher bandwidth or support convenience functions like lower power operation, invisible mode or authentication.

It is especially preferred that the radio beacon uses Ultra Wide Band (UWB) and/or the wireless interface uses Bluetooth. UWB may advantageously support good precision of the determined position. As a technology related to radar imaging, positioning can be based on a wealth of existing schemes and there exist plenty of hardware for supporting UWB. UWB is license free in many countries and does not carry over larger distances so that other radio technologies are not disturbed. The Bluetooth connection may use classic Bluetooth (BT) or Bluetooth Low Energy (BLE), which is an evolution of BT. BT/BLE typically features a much larger range than UWB in the range of 100 m or more, depending on objects in the area. BT/BLE hardware is very well available at competitive prices. Software for driving such hardware may also be commonly available.

it is furthermore preferred that determining the position of the motor vehicle with respect to said radio beacon is controlled over the wireless interface. The wireless interface, based for instance on BT/BLE, may be used for advertising one side of the connection and the other side may chose to accept a connection. This may require a connection process which may require a PIN or a password to be entered. Once a data link is established on BT/BLE, ranging between the vehicle and the beacon may be started.

Determining the position is usually done with channel sounding. In this, distances between a transceiver on the one side and several physically spaced transceivers on the other side are determined. Based on the physical constellation of the transceivers the position of the other side can be determined. The motor vehicle may feature only one transceiver in which case there should be several transceivers on the side of the control device. The vehicle may have several transceivers in different places. A common configuration comprises one transceiver at each corner of the vehicle and possibly two more on its sides. In this case, one transceiver on the side of the control device may suffice. It is to be noted that precision of a determined position may be increased by using more transceivers so that more distances can be determined. It is also to be noted that for maximum precision, a geometric constellation of the transceivers should be chosen such that a geometric body that is defined by the transceivers has the largest possible volume. A figure describing such a volume is known as geometric dilution of precision (GDOP).

The control device may be adapted to act as a friend device according to the DCK standard and to accept the digital car key from an owner of the motor vehicle. It is preferred that the digital car key can be shared with the control device without any user interaction. Details for such operation may be subject of an upcoming version of said standard. However, working documents for this feature are mature enough for an early implementation at the time of this writing.

The digital car key for the control device may grant only limited control over the motor vehicle. It is preferred that the control device uses a digital car key that can effect movements of the vehicle only with limited speed and/or distance. The distance may be calculated from a starting position where the control device started giving instructions for moving the vehicle. Alternatively, the distance may be measured to a nearest wireless interface or a radio beacon of the control device.

A motor vehicle with a control unit is proposed in which the control unit is adapted to control a predetermined safety function of the vehicle based on a digital car key. Such a safety function may especially comprise a movement of the vehicle based on an external request or signal. Said control unit is preferred to be adapted to receive a movement control signal for said vehicle; and to control the vehicle according to said control signal. Movement of the vehicle on the basis of an external signal may be limited to a predetermined speed or distance in the first place. For instance, a moving speed of the vehicle may be limited to a walking speed or even lower.

According to another aspect of present invention there is proposed a system, the system comprising a control device as disclosed herein and a motor vehicle as disclosed herein. The system may facilitate automatic movement of the vehicle in a closed area. This area may for instance comprise a work shop or a manufacturing premise. The vehicle may be controlled to move from one booth or stall to a next one where a predetermined service measure may be carried out on the vehicle.

According to yet another aspect of present invention a method for controlling a motor vehicle comprises steps of determining a position of the vehicle by a control device; wherein the position is determined relative to at least one radio beacon that is disposed at a fixed location outside the motor vehicle; determining a destination for the vehicle; authenticating the control device against the motor vehicle using a digital car key for the vehicle; determining a movement control signal such that the vehicle may move itself from the determined position to said destination; and transmitting said movement control signal from said control device to the motor vehicle.

The method may be carried out, completely or in part, by means of a control device, a motor vehicle or a system as disclosed herein. An item running part of said method may comprise a processing unit that is preferred to be of electronic nature and may comprise an integrated circuit, a programmable logic device, a programmable micro computer or a programmable micro controller. The method or a part of it may be expressed as a computer program product with program code means. The computer program product may be running on a processing unit or be stored on computer-readable media. Features or advantages of the method, the control device, the motor vehicle and the system may be transferred accordingly.

The destination may be determined based on the vehicle's position and a map of the surroundings of the vehicle. The map may indicate objects to avoid, a track or way to follow or a potential destination like a booth or stall. The map is preferred to also indicate a radio beacon of the control device.

It is furthermore preferred that a wireless communication link is maintained between the vehicle and the control device at least as long as the vehicle is moving. Should the wireless communication link to said control device get interrupted, vehicle movement is preferred to be stopped. Unintended or uncontrolled movement of the vehicle may be prevented. An accident or material harm through the moving vehicle may be stopped.

According to another embodiment, the vehicle may scan its surroundings; and provide the scan to the control device. The control device may then determine the destination based on the scan. Scanning may be done with an on-board sensor which is preferred to operate contactless. For instance, a camera, a LiDAR sensor, an ultrasonic sensor or a radar sensor may be used. The scan may be processed in the sensor or on board the vehicle before it is provided to the control device. The control device may thus employ an obstacle avoidance technology of the vehicle for determining a movement request signal.

In another embodiment, the destination of the vehicle may be updated while the vehicle is moving. Instead of only one destination the control device may determine a trajectory for the vehicle, possibly in the shape of a series of positions or poses for the vehicle. The trajectory may be controlled dynamically and especially in reaction to an obstacle that lies in a path of the vehicle.

The invention may especially be used in the context of a service measurement for the vehicle. The vehicle may be moved around in a shop or factory and the destination may be chosen such that a planned service measure on the vehicle can be performed at the destination. A service or manufacturing process of the vehicle may be greatly simplified by present invention. A vehicle that is able to drive to a predetermined position under its own power may make a driver or a conveyor belt obsolete. Especially if the vehicle has an electric drive motor, it can be moved around a closed space with great precision and without harmful emissions. Shop or manufacturing personnel may thus be protected agains adverse working conditions.

The invention will now be described in more detail with reference to the enclosed figures in which
- figure 1: shows a system; and
- figure 2: shows a flow diagram of a method.

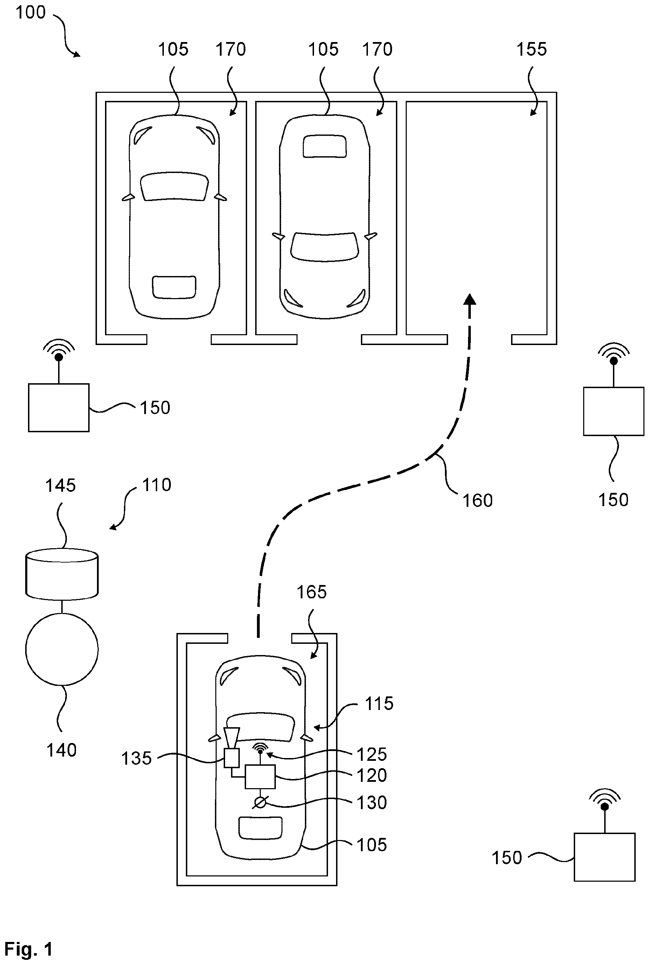

Figure 1 shows a system 100, comprising a motor vehicle 105 and a control device 110. The motor vehicle 105 is preferred to comprise a passenger car or any other vehicle that can drive at slow speeds on its own power and control. The vehicle 105 may have an electric traction engine and an electric energy storage for the engine. Such items are state of the art and have no symbols or reference signs in figure 1.

The vehicle may further comprise a control unit 115 which is adapted to secure the vehicle 105 against unsolicited use by implementing a scheme according to the Digital Car Key as defined by the CCC. A security-relevant function of the vehicle, especially operating a central locking system, an engine immobilizer or a steering lock, may thus be protected. On the other hand, the control unit 115 may permit triggering or controlling a safety-related function based on a digital car key.

The control unit 115 may comprise a processing unit 120, a wireless communication interface 125 and an interface 130 for connecting to another function or system of the vehicle 105. The interface 130 may be wired to data bus of the vehicle 105. The other system may comprise a propulsion system, a steering system or a braking system; other systems are also possible. There may also be a sensor 135 which is adapted to scan a surrounding of the vehicle 105. Movement of the vehicle 105 may be requested by using a valid digital car key to authenticate against the control unit 115. If the key has sufficient privileges, the requested function may be controlled.

The DCK foresees that a requested function of the vehicle 105 is only executed if a device the digital car key is stored on is found within a predetermined area with respect to the vehicle 105. The relative position of the device may be determined wirelessly and should the device be found to be outside the respective area, execution of the request may be denied.

Determining the relative position is generally done which channel sounding, which requires at least one side - the control unit 115 or the external device - to have more than one transceiver. By observing signal travel times between transceivers on the different sides, a set of distances is determined. On the basis of a known layout of transceivers on one side a relative position of the other side can be determined e.g. using triangulation.

It is preferred that the wireless interface 145 is adapted to support a first radio technology that may be used for ranging (and especially channel sounding) and a second radio technology that may be used for communication. Said first radio technology may comprise UWB and said second radio technology may comprise BT/BLE. One or more transceivers may be available for said first and/or second radio technology on board the vehicle 105. Separate transceivers may also be used for the different radio technologies.

The control device 110 comprises a processing unit 140 and a secure storage 145 for holding a digital car key. Wireless interfaces 150 or respective transceivers may be distributed in a predetermined area over which the vehicle 105 is to be moved. A wireless interface 150 may again be adapted to use said first radio technology and/or said second radio technology. Separate wireless interfaces for the different radio technologies may also be used.

It is proposed that the device 110 is adapted to act as a friend device with respect to the vehicle 105. In DCK terminology, there exist roles that are called owner and friend. An owner generally has unlimited privileges and can especially sign a digital key for a friend. The friend may have a digital key that is limited in its capability to control the vehicle 105. Signing another friend key may or may not be possible. A digital car key is stored on a device and may not be usable if it is removed from that device. Therefore, there may be an owner device with an owner key and a friend device with a friend key.

A communication link may be established between the vehicle 105 and the control device 110 using the second radio technology. Over this link a wireless interface 150 may be selected, usually the one closest to the vehicle 105. The vehicle 105 may then determine the position of said wireless interface 150 relative to itself. This is equivalent to determining the relative position of the vehicle 105 with respect to the wireless interface 150.

In a variant, the relative position of the vehicle 105 may be determined with respect to a plurality of wireless interfaces 150 using the same first radio technology. A measured distance or determined position on one side of the communication link may be transferred to the other end.

The position of the vehicle 105 relative to the control device 110 may be compared to map data of the area. Obstacles or ways for moving the vehicle may be determined. A destination 155 for the vehicle 105 and/or a trajectory 160 from its present position 165 may be determined.

In figure 1, the vehicle 105 is to be moved from a first booth 165 to a second booth 155 along the trajectory 160. The system 100 may be installed on a work shop or a manufacturing plant for said vehicle 105 and there may be different booths 155, 165 for carrying out different service measures on the vehicle 105. A process of manufacturing, servicing or fixing said vehicle 105 may comprise moving it several times and different operations may be carried out on the vehicle 105 in different places.

According another embodiment, the vehicle 105 may be temporarily parked, especially between service jobs. The destination 155 in figure 1 may therefore comprise a parking space. The vehicle may be moved there for some time, e.g. until some splice has cured or a computer download has finished, and the vehicle may be moved back into the booth 165 (or another booth) for another service measure. In figure 1, there are exemplary booths 170 which may be currently occupied by other vehicles 105.

The vehicle may assist in finding or navigating to a destination by scanning its environments with the on-board sensor 135. Scanning results may be shared or forwarded to the control device 110 via the radio link. The control device 110 may adjust the destination 155 or the trajectory 160 based on the scanning results. In one embodiment, a high level functionality for determining the destination 155 may be carried out on board the vehicle 105. For instance, the vehicle may determine a free booth 155 in its environment and the control device 110 may select the free booth as destination 155 for the vehicle 105.

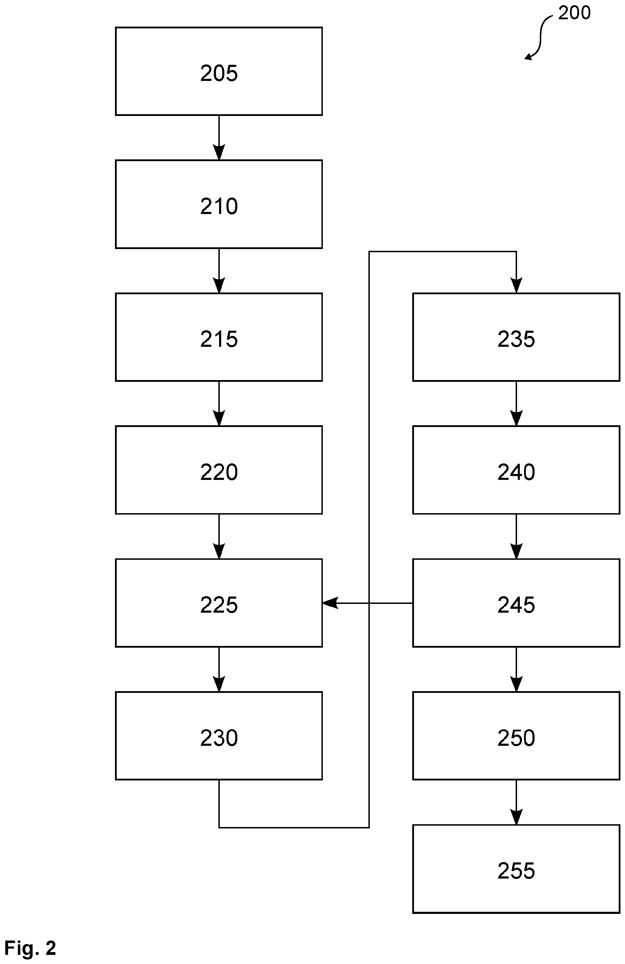

Figure 2 shows a flow chart of an exemplary method 200 for automatically moving or controlling a vehicle 105 from a present position 165 to a destination 155. The method 200 may especially be carried out with a system 100 as of figure 1.

In a step 205 a friend key may be assigned to the control device 110. The friend key may be stored in said storage 145. Assuming that the vehicle 105 is currently in the first booth 165, a first service measure may be carried out on the vehicle 105 in a step 210.

In a step 215 moving of the vehicle 105 to a different location may be triggered. For instance, a worker who has carried out said first service measure on the vehicle 105 may decide it is time to move the vehicle 105 away. A corresponding input of the worker on a human interface may be detected by the control device 110. The input may or may not comprise a precise destination 155 for the vehicle 105.

In order to move the vehicle 105, the control device 110 may use the digital car key it was assigned and authenticate in a step 220 against the vehicle 105 or the control unit 115, respectively. Before or after authentication, a relative position of the vehicle 105 with respect to the control device 110 may be determined. In figure 2, this takes place in a step 225. The vehicle 105 may then scan its surroundings. A result of the scan may be transmitted to the control device 110 in a step 230.

In a step 235, a destination 155 and/or a trajectory 160 for the vehicle 105 may be determined. This may be done on the basis of said scan, the determined current position 165 and/or a map of an area comprising the vehicle 105. In a step 240, a movement control signal for the vehicle 105 may be determined. Such a control signal may for instance comprise a request to steer in a predetermined direction and/or to move with a predetermined speed over a predetermined distance.

The signal may be transmitted to the vehicle in a step 245. It is preferred that said request is secured with the digital car key of the device 110, which may imply that the device 110 must re-authenticate against the vehicle 105. From here, steps 225 through 245 may be executed several times in a loop.

In a step 250 it can be determined that the vehicle 105 has reached its destination 155. In the scenario described above with respect to figure 1, a second service measure may be performed on the vehicle 105 in this place. In an alternative case, the vehicle 105 may be parked at the destination 155 until a successive service measure can be carried out on it.

Use of the invention as disclosed herein will now be explained further by giving exemplary and non-limiting use cases.
1. A vehicle 105 is in the middle of a service process in a workshop. A service worker finishes one service item and tries to repark the vehicle 105 for the next service item at another place 155. The service worker clicks in a user interface of the control device 110 and selects a parking location 155 of next service item. The device 110 instructs the vehicle for reparking to the place 155.
2. A vehicle 105 is in the middle of production process in a plant. A plant worker clicks in a user interface of the device 110 and selects the parking location 155 of next production action, e.g. examination, parking lot before transportation.
3. A vehicle user drives the vehicle 105 entering indoor parking. The vehicle user leaves the vehicle 105 at an entrance of the parking lot. The device takes 110 over and instructs the vehicle 105 to park in a dedicated parking lot 155.

### Reference Numerals

- 100: system
- 105: motor vehicle
- 110: control device
- 115: control unit
- 120: processing unit
- 125: wireless communication interface
- 130: interface
- 135: sensor
- 140: processing unit
- 145: secure storage
- 150: wireless interface
- 155: destination (second booth)
- 160: trajectory
- 165: position (first booth)
- 170: booth

- 200: method
- 205: assign friend key to control device
- 210: perform first service measure in first service booth
- 215: trigger vehicle reparking
- 220: authenticate using friend key
- 225: determine position of vehicle relative to beacon
- 230: scan vehicle surroundings and transmit result to control device
- 235: determine destination or trajectory
- 240: determine movement control signal
- 245: transmit signal
- 250: arrival in second booth
- 255: perform second service measure in second service booth

## Claims

1. Control device (110) for a motor vehicle (105), the control device (110) comprising:
- a radio beacon (150) that is disposed at a fixed location outside the motor vehicle (105);
- a control unit (140) with a storage (145) for holding a digital car key for said motor vehicle (105);
- wherein the control unit (140) is adapted to determine a position (165) of the vehicle (105) relative to said radio beacon (150); to determine a destination (155) for said vehicle; to authenticate against the motor vehicle (105) using said digital car key; to determine a movement control signal such that the vehicle (105) may move itself from the determined position to the destination (155); and to transmit said movement control signal to said motor vehicle (105).

2. Control device (110) according to claim 1, wherein the radio beacon (150) uses a first radio technology and the control device (110) comprises a wireless interface that uses a second radio technology different from the first radio technology.

3. Control device (110) according to claim 1 or 2, wherein the radio beacon (150) uses Ultra Wide Band and/or the wireless interface uses Bluetooth.

4. Control device (110) according to one of claims 2 or 3, wherein determining the position of the motor vehicle (105) with respect to said radio beacon (150) is controlled over the wireless interface.

5. Control device (110) according to one of the above claims, wherein authentication is carried out following the specifications of the Digital Car Key technical standard.

6. Control device (110) according to claim 5, wherein the control device (110) is adapted to act as a friend device (110) and to accept the digital car key from an owner of the motor vehicle (105).

7. Control device (110) according to one of the above claims, wherein movements of the vehicle (105) which can be controlled using the digital car key are limited in speed and/or distance of the vehicle (105).

8. Motor vehicle (105) with a control unit (115) that is adapted to control a predetermined safety function of the vehicle (105) based on a digital car key; wherein said control unit (115) is adapted to receive a movement control signal for said vehicle (105); and to control the vehicle (105) according to said control signal.

9. System (100), comprising a control device (110) according to one of claims 1 through 7 and a motor vehicle (105) according to claim 8.

10. Method (200) for controlling a motor vehicle (105), the method (200) comprising steps of:
- determining (225) a position (165) of the vehicle (105) by a control device (110);
- wherein the position (165) is determined relative to at least one radio beacon (150) that is disposed at a fixed location outside the motor vehicle (105);
- determining (235) a destination for the vehicle (105);
- authenticating (220) the control device (110) against the motor vehicle (105) using a digital car key for the vehicle (105);
- determining (240) a movement control signal such that the vehicle (105) may move itself from the determined position (165) to said destination (155); and
- transmitting (245) said movement control signal from said control device (110) to the motor vehicle (105).

11. Method (200) according to claim 10, wherein the destination (155) is determined based on the vehicle's (105) position (165) and a map of the surroundings of the vehicle (105).

12. Method (200) according to claim 10 or 11, wherein vehicle movement is stopped if a wireless communication link to said control device (110) is interrupted.

13. Method (200) according to one of claims 10 through 12, wherein the vehicle (105) scans its surroundings; and provides (230) the scan to the control device (110); and wherein the control device (110) determines the destination based on the scan.

14. Method (200) according to one of claims 10 through 13, wherein a planned service measure on the vehicle is performed (255) at the destination (155).
